# EUROPEAN PATENT APPLICATION

(11) **EP 4 534 498 A1**
(43) Date of publication of application: **09.04.2025**
(21) Application number: 24199398.9
(22) Date of filing: 10.09.2024
(51) Int. Cl.: C04B 7/04, C04B 7/24

(54) **METHOD OF PRODUCING CALCIUM OXIDE FROM A SOURCE OF CALCIUM SULFATE**

(30) Priority: 06.10.2023 EP 23020463
(71) Applicant: Holcim Technology Ltd, 6300 Zug (CH)
(72) Inventor: DIETZ, Stefan, 5113 Holderbank (CH); BOES, Karl-Heinz, 5113 Holderbank (CH); STOFFEL, Beat, 5113 Holderbank (CH); SEYLER, Laurent, 5113 Holderbank (CH)
(74) Representative: SONN Patentanwälte GmbH & Co KG

(57) **Abstract**

A method of producing calcium oxide from a source of calcium sulfate, comprising
- providing a raw material comprising a source of calcium sulfate that comprises chemically bound water,
- a desulfurization step of heating the raw material in the presence of a reducing agent so as to desulfurize the calcium sulfate to obtain
a) calcium oxide,
b) steam, and
c) sulfur dioxide,
wherein the steam obtained from the desulfurization step is used to produce sulfuric acid from the sulfur dioxide.

## Description

The invention refers to a method of producing calcium oxide from a source of calcium sulfate.

The production of Portland clinker is traditionally done by preparing a raw meal that comprises limestone and raw clays, and calcining this raw material in a rotary kiln at a temperature of around 1'450°C. During this calcination step, the calcium carbonate in the limestone decarbonates to form carbon dioxide and calcium oxide. Furthermore, the rotary kiln used for the production of Portland clinker is heated by a burner, which produces heat from burning carbon-containing materials, such as fuels and waste materials, which also produces carbon dioxide. These two processes run simultaneously in a Portland clinker manufacturing plant, and produce high amounts of carbon dioxide.

An alternative method of production of Portland clinker that does not require the use of calcium carbonate materials is based on the Müller Kühne (MK) process, wherein a source of calcium sulfates is used as a starting material. In the MK-process calcium sulfate, for example in the form of gypsum, is reduced to calcium sulfide which reacts with calcium sulfate to give sulfur dioxide and calcium oxide, the latter being the main material to obtain cement. The MK-process takes place at temperatures of around 800°C and requires a source of carbon, which acts as a reducing agent. The calcium oxide resulting from the MK-process is further processed to obtain cement clinker.

US 2022/0204403 A1 discloses a method of producing cement and co-producing sulfuric acid from phosphogypsum.

EP 728713 B1 discloses a process where calcium sulfate materials are mixed with reactive carbon, and calcined at a first temperature of over 700°C so as to obtain calcium oxide, and the calcium oxide is then calcined at a temperature of over 1200°C in the presence of silica, alumina and iron oxide to obtain clinker. The SO₂ containing flue gas is then treated to be converted to SO₃ to produce sulfuric acid.

DE 19625538 B4 discloses a method of producing Portland cement and sulfuric acid by the MK-process, wherein waste gypsum board and other gypsum rubble are used as a source of calcium sulfate. The waste gypsum boards are pre-reduced to a uniform mill-processable edge length, sorted and freed from foreign materials such as wood, steel and plastic pieces, ground to powder fineness under throttled air suction, mixed with other cement starting material powder components and, after optional intermediate storage, processed in the rotary kiln to form cement clinker.

In the known methods of producing cement based on the MK-process, silica, alumina and iron oxide are added to the process. These additional components are required in addition to the calcium oxide produced during the process so that the mixture that is further processed at high temperatures has an overall composition that is suitable for the production of Portland clinker.

Conducting a one-step process in the presence of silica, alumina and iron oxide has limitations in setting the optimum process conditions, such as atmosphere and temperature, so that the clinker product quality may be impaired and operation costs are elevated. In particular, sulfate circuits may arise, meaning that operational issues will occur such as kiln stops, triggered for example by blockages from material build-ups. Further, different temperature levels should be adjusted for the MK-process on the one hand and for the subsequent calcination of calcium oxide as well as silica, alumina and iron oxide to form clinker on the other hand.

Further, some sources of calcium sulfate, such as gypsum or phosphogypsum, contain considerable amounts of chemically bound water, which is released during the desulfurization process in the form of steam. It would be desirable to further utilize the steam in an economically and ecologically advantageous manner.

Therefore, the instant invention aims at improving a method of producing calcium oxide from a source of calcium sulfate.

In order to solve this and other objects, the invention provides a method of producing calcium oxide from a source of calcium sulfate, comprising
- providing a raw material comprising a source of calcium sulfate that comprises chemically bound water,
- a desulfurization step of heating the raw material in the presence of a reducing agent so as to desulfurize the calcium sulfate to obtain
   a) calcium oxide,
   b) steam, and
   c) sulfur dioxide,
wherein the steam obtained from the desulfurization step is used to produce sulfuric acid from the sulfur dioxide.

Therefore, according to the invention, the water chemically bound in the source of calcium sulfate is released during the desulfurization step in the form of steam, which may be collected from the off-gas of the desulfurization step for being further used to produce sulfuric acid from the sulfur dioxide. Prio to being used to produce sulfuric acid from the sulfur dioxide, the steam may be condensed in order to obtain water.

The process of producing sulfuric acid from sulfur dioxide and steam/water may be carried out by methods known in the art, such as the "contact process".

Preferably, the steam obtained is condensed to obtain water by withdrawing heat from the steam in a heat exchanger, wherein the withdrawn heat is preferably used to dry the source of calcium sulfate or the raw material, so as to remove free water from the raw material. Free water is here defined as water that is not chemically bound to calcium sulfate, meaning that it can evaporate at temperatures below 100°C. Water chemically bound to calcium sulfate, as in gypsum and hemihydrate, does not evaporate at temperatures below 100°C, it does however get released by dehydration at temperatures typically above 150°C.

According to a preferred embodiment of the invention, the desulfurization step comprises
a) a step of reducing a first portion of the calcium sulfate in the presence of the reducing agent in a reduction reactor to obtain calcium sulfide, and
b) a step of converting calcium sulfide into calcium oxide by using a second portion of the calcium sulfate.

In case a carbon source is used as the reducing agent, the desulfurization of calcium sulfate may comprise the following reactions:

CaSO₄ + 2C → CaS + 2CO₂

In this reaction, the carbon (C) from the reducing agent directly reduces calcium sulfate (CaSO₄) to calcium sulfide (CaS) .

In addition, a Boudouard reaction is taking place, wherein carbon from the reducing agent reacts with carbon dioxide to produce carbon monoxide (CO). The carbon monoxide generated can then participate in the reduction of calcium sulfate:

CaSO₄ + 4CO → CaS + 4CO₂

According to a preferred embodiment, a first partial amount (for example 12-44 wt.-%, preferably 20-35 wt.-%) of the calcium sulfate is converted to calcium sulfide in step a). The second amount of calcium sulfate contained in the raw material is used in step b) to convert the calcium sulfide obtained in step a) to calcium oxide and sulfur dioxide according to the following reaction:

CaS + 3 CaSO₄ --> 4 CaO + 4 SO₂

Preferably, a mass fraction of the calcium sulfate of 0.05 to 0.8, more preferably 0.1 to 0.4 reacts to calcium sulfide in step a) and the second amount, which may be the remaining fraction, is used in step b).

The second amount of the calcium sulfate preferably corresponds to the fraction of calcium sulfate that remains unreacted when it is withdrawn from the reduction reactor. Alternatively, only the first amount of the calcium sulfate is subjected to the first step and the second amount is fed to the second step without passing through the reduction reactor.

Preferably, the calcium oxide obtained from the desulfurization step may be used in an additional step of calcining the calcium oxide in the presence of silica, alumina, and iron oxide containing materials to obtain cement clinker.

Preferably, said additional step is carried out in a clinkerization reactor. In case desulfurization of calcium sulfate is carried out in two steps a) and b) as mentioned above, step a) may be carried out in a reduction reactor and step b) may be carried out in the same clinkerization reactor, in which the additional step of calcining the calcium oxide is performed. Alternatively, step a) may be carried out in a reduction reactor and step b) may be carried out in a reactor, that is not the clinkerization reactor, in which the additional step of calcining the calcium oxide is performed.

By carrying out the desulfurization step and the additional step of calcining the calcium oxide to cement clinker in separate reactors, each step may be optimized with respect to its process conditions, including atmosphere and temperature. The desulfurization step of the method is carried out to obtain a pre-calcined material comprising calcium oxide and the process conditions of the desulfurization step can be adjusted to the requirements of the process, such as lower temperature than in the additional step and a reducing atmosphere. Further, the desulfurization step may be improved with regard to the proper separation of sulfur dioxide from the pre-calcined material comprising calcium oxide. In this way, less or no sulfate will be entrained into the additional step and the resulting cement clinker will have a reduced saturation with sulfate. Further, the entrainment of any unreacted calcium sulfate into the additional step may be reduced or eliminated, resulting in a cement having a lower content of calcium sulfate.

Since an optimal temperature may be adjusted for each of the steps, the energy efficiency of the overall process is increased.

Further, the generation of calcium oxide as the intermediate product can be controlled very well, e.g. by controlling the dosage of the reducing agent, the sulfur content, the CaSO₄ retention time and the temperature, therefore a higher quality clinker may be achieved in the second step.

Also, the desulfurization step and the additional step can be carried out at different geographical locations, considering the availability and/or the market for gypsum, sulfuric acid, CO₂ and the final clinker product.

Preferably, the additional materials needed for the production of Portland clinker, namely silica, alumina and iron oxide, may already be present in the initial raw material so that they are subjected to the heat treatment of the desulfurization step together with the source of calcium sulfate. Silica, alumina and iron oxide are required to be present in the pre-calcined material that is subjected to the additional calcination step, because they react with calcium oxide and form clinker minerals, in particular alite (Ca3SiO5), belite (Ca2SiO4), tricalcium aluminate (Ca3Al2O6), and tetracalcium aluminoferrite (Ca4Al2Fe2O10). The presence of silica, alumina, and iron oxide at the elevated temperatures existing during the desulfurization step might lead to some initial formation or pre-conditioning of such mineral phases, which could potentially make the later calcination step more efficient or predictable.

The optional step of blending the source of calcium sulfate with the silica, alumina, and iron oxide containing materials may be carried out in a separate mixing device before the resulting raw material is subjected to the desulfurization step. Alternatively, the blending step may be carried out in the same reactor as the desulfurization step, prior to or during the desulfurization step.

In another embodiment, the method of the invention does not comprise a step of calcining the calcium oxide in the presence of silica, alumina, and iron oxide containing materials to obtain cement clinker.

In a preferred embodiment, the silica, alumina, and iron oxide containing materials comprise recycled or waste materials. In a preferred embodiment, the silica, alumina, and iron oxide containing materials comprise at least 40 wt.-% of recycled or waste materials.

The recycled or waste materials can be selected from any of the following materials: mineral waste materials from construction and demolition such as concrete demolition waste, recycled aggregates, recycled bricks, coal ashes, or steel slags.

The use of waste and recycled materials decreases the environmental impact of this production process, by minimizing the need to use virgin materials.

As to the control of the temperature in the steps of the method of the invention, a preferred embodiment provides that the desulfurization step is carried out at a temperature of 500-1100°C and the additional step is carried out at a temperature of 1200-1500°C.

Various sources of calcium sulfate may be used as a starting material for the desulfurization step. In particular, the source of calcium sulfate may be gypsum, hemihydrate, waste calcium sulfate and/or phosphogypsum, the latter being widely available as it is most often landfilled in large quantities, being a by-product of the production of phosphate-based fertilizers or phosphoric acid.

In order to maximize the surface to volume ratio of the calcium sulfate source, thereby increasing the efficiency of the reaction between the calcium sulfate source and the reducing agent during the desulfurization step, the source of calcium sulfate is preferably provided in the form of a powder, preferably having a maximum particle size of 300 µm. Herein, the particle size is measured by sieving.

Considering that some sources of calcium sulfate have a high content of free water, a preferred embodiment of the invention provides that the source of calcium sulfate is dried (dehydrated) to a water content of < 2 wt.-%, preferably less < 1 wt.-%, before being subjected to the desulfurization step, e.g. before being introduced into the reduction reactor.

Preferably, a heat exchanger is used in order to withdraw heat from the calcium oxide, the steam, the sulfur dioxide and/or the cement clinker, wherein the heat is preferably used to dry the source of calcium sulfate or the raw material.

For the desulfurization step to be conducted in an efficient way, the desulfurization step preferably is carried out in a reducing atmosphere, wherein the oxygen content is preferably below 0.7 vol.-%.

The reducing agent may preferably be a source of carbon in solid form, such as coal in powder form (e.g. mineral coal, coke, charcoal or even plant coal). In case a source of carbon is used as the reducing agent, the flue gas from the desulfurization step comprises a high concentration of carbon dioxide and sulfur dioxide. Other reducing agents can be metal powders, such as calcium, aluminum, silicium, iron, or mixtures thereof. Another option is the use of hydrogen. In another embodiment, any reducing agent other than hydrogen is used.

The sulfur dioxide is separated from the gas, for example by a scrubber, to form sulfuric acid, which is a by-product of the present process that can be made further use of in other industrial applications. When the desulfurization step comprises an oxyfuel combustion process, in which additional oxygen is injected into the burner, the carbon dioxide extracted from the process has a higher level of purity and can easily be used in other applications or sequestered.

As mentioned above, the desulfurization step and the additional step may be carried out in two different and separate reactors. Preferably, the desulfurization step is at leas partially carried out in a cement raw meal preheater tower or one or more strings of suspension preheaters of a cement manufacturing plant operating according to the dry process. This allows to use existing cement manufacturing plants for conducting the method of the invention.

The additional step of calcining the calcium oxide may be carried out in a clinkerization reactor that is preferably designed as a rotary kiln or as a flash calciner. In particular, an existing rotary calcination kiln of a cement manufacturing plant may be used.

In order to prevent sulfur compounds obtained in the desulfurization step of the method of the invention from being entrained into the additional step, the sulfur dioxide is separated from the pre-calcined material comprising calcium oxide, before the pre-calcined material is fed to the additional step.

As mentioned before, an advantage of the present invention is the greater flexibility as to the use of the pre-calcined material comprising calcium oxide obtained from the desulfurization step, since it is provided as a separate intermediate product. According to a first alternative, the pre-calcined material comprising calcium oxide coming from the desulfurization step is allowed to cool to ambient temperature and is stored before being used in the additional step.

According to a second alternative, the pre-calcined material comprising calcium oxide is withdrawn from the desulfurization step at a first temperature and is introduced into the clinkerization rector at a second temperature that is < 100°C below the first temperature. In particular, both reactors may operate in cascade to make sure that the materials entering the clinkerization reactor retain heat so as to reduce the energy consumption of the clinkerization reactor.

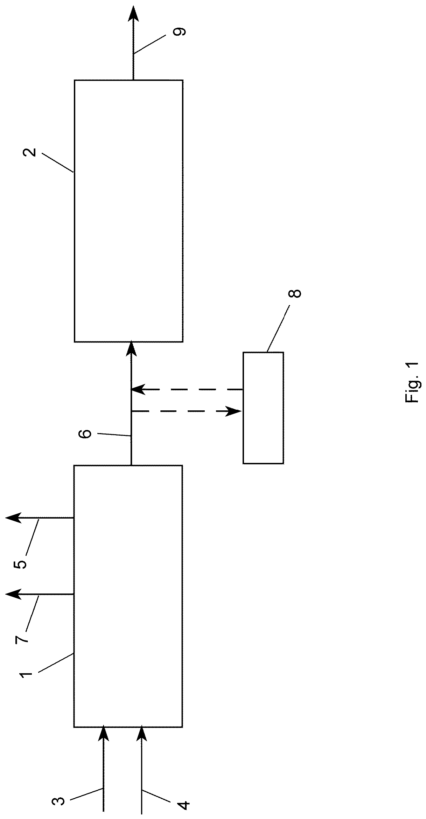

The invention will now be described by means of an exemplary embodiment illustrated in Fig. 1. The figure shows a reduction reactor 1 and a clinkerization reactor 2. The desulfurization step of the method according to the invention is carried out in the reduction reactor 1. The optional additional first step of the method according to the invention is carried out in the clinkerization reactor 2.

In the desulfurization step, a raw material 3 comprising a source of calcium sulfate optionally blended with silica, alumina, and iron oxide containing materials is introduced into the reduction reactor 1 and is calcined in the presence of a reducing agent 4 in order to obtain calcium oxide and sulfur dioxide at a temperature of 700-1300°C. As a result, a pre-calcined material 6 comprising calcium oxide, sulfur dioxide 5 and steam 7 are obtained, which are separately withdrawn from the reduction reactor 1. Alternatively, pre-calcined material, the sulfur dioxide and the steam are withdrawn from the reduction reactor 1 together and separated in an external separator.

In an additional, optional step, the pre-calcined material 6 is calcined in the clinkerization reactor 2 in order to obtain cement clinker 9.

If desired, the pre-calcined material 6 coming from the reduction reactor 1 or at least a partial amount thereof, may be stored in a storage 8 and used in other applications or introduced into the clinkerization reactor 2 at a later point in time.

## Claims

1. A method of producing calcium oxide from a source of calcium sulfate, comprising
- providing a raw material comprising a source of calcium sulfate that comprises chemically bound water,
- a desulfurization step of heating the raw material in the presence of a reducing agent so as to desulfurize the calcium sulfate to obtain
a) calcium oxide,
b) steam, and
c) sulfur dioxide,
wherein the steam obtained from the desulfurization step is used to produce sulfuric acid from the sulfur dioxide.

2. Method cording to claim 1, wherein the desulfurization step comprises
a) a step of reducing a first portion of the calcium sulfate in the presence of the reducing agent in a reduction reactor to obtain calcium sulfide, and
b) a step of converting calcium sulfide into calcium oxide by using a second portion of the calcium sulfate.

3. Method according to claim 1 or 2, further comprising an additional step of calcining the calcium oxide in the presence of silica, alumina, and iron oxide containing materials to obtain cement clinker.

4. Method according to claim 3, wherein the raw material is obtained by blending the source of calcium sulfate with the silica, alumina, and iron oxide containing materials.

5. Method according to claim 3 or 4, wherein the desulfurization step is carried out at a temperature of 500-1100°C and the additional step of calcining the calcium oxide is carried out at a temperature of 1200-1500°C.

6. Method according to any one of claims 1 to 5, wherein the source of calcium sulfate is gypsum, hemihydrate, waste calcium sulfate and/or phosphogypsum.

7. Method according to any one of claims 1 to 6, wherein the source of calcium sulfate is provided in the form of a powder, preferably having a maximum particle size of 300pm measured by sieving.

8. Method according to any one of claims 1 to 7, wherein the source of calcium sulfate or the raw material is dried to a water content of < 2 wt.-% before being subjected to the desulfurization step.

9. Method according to any one of claims 1 to 8, wherein the desulfurization step is carried out in a reducing atmosphere, wherein the oxygen content is preferably below 0.7 vol.-%.

10. Method according to any one of claims 1 to 9, wherein a source of carbon in solid form, such as coal in powder form, a metal powder, such as calcium, aluminum, silicium, iron, or mixtures thereof, is used as the reducing agent.

11. Method according to any one of claims 1 to 10, wherein the reducing agent does not comprise hydrogen.

12. Method according to any one of claims 1 to 11, wherein the desulfurization step is at least partially carried out in a preheater tower or one or more strings of suspension preheaters of a cement manufacturing plant operating according to the dry process.

13. Method according to any one of claims 3 to 12, wherein the additional step of calcining the calcium oxide is carried out in a clinkerization reactor that is preferably designed as a rotary kiln or as a flash calciner.

14. Method according to any one of claims 3 to 13, wherein the sulfur dioxide obtained in the desulfurization step is separated from the calcium oxide , before the calcium oxide is fed to the additional step of calcining the calcium oxide.

15. Method according to any one of claims 3 to 14, wherein the calcium oxide coming from the desulfurization step is allowed to cool to ambient temperature and is stored before being used in the additional step of calcining the calcium oxide.

16. Method according to any one of claims 12 to 15, wherein the calcium oxide is withdrawn from the desulfurization step at a first temperature and is introduced into the clinkerization rector at a second temperature that is < 100°C below the first temperature.

17. Method according to any one of claims 3 to 16, wherein the silica, alumina and iron oxide containing materials comprise recycled or waste materials.

18. Method according to claim 17, wherein the recycled or waste materials are selected from any of the following materials:
mineral waste materials from construction and demolition such as concrete demolition waste, recycled aggregates, recycled bricks, coal ashes, or steel slags.

19. Method according to any one of claims 1 to 18, wherein a heat exchanger is used in order to withdraw heat from the calcium oxide, the steam, the sulfur dioxide and/or the cement clinker, wherein the heat is preferably used to dry the source of calcium sulfate or the raw material.

20. Method according to any one of claims 1 to 19, wherein the steam is condensed to obtain water by withdrawing heat from the steam in a heat exchanger, wherein the withdrawn heat is preferably used to dry the source of calcium sulfate or the raw material so as to remove free water from the raw material.
